(19) Europäisches Patentamt / European Patent Office / Office européen des brevets

(11) **EP 2 868 789 A1**

(12) **EUROPEAN PATENT APPLICATION**
published in accordance with Art. 153(4) EPC

(43) Date of publication:
**06.05.2015 Bulletin 2015/19**

(51) Int Cl.:
***D03D 1/02*** *(2006.01)*   ***B60R 21/16*** *(2006.01)*

(21) Application number: **13810597.8**

(22) Date of filing: **24.06.2013**

(86) International application number:
**PCT/KR2013/005555**

(87) International publication number:
**WO 2014/003392 (03.01.2014 Gazette 2014/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.06.2012 KR 20120071025**
**29.06.2012 KR 20120071026**

(71) Applicant: **Kolon Industries, Inc.**
**Gwachoen-si,**
**Gyeonggi-do, 427-709 (KR)**

(72) Inventors:
• **YOUN, Jung-Hoon**
**Yongin-si**
**Gyeonggi-do 446-797 (KR)**
• **KIM, Jae-Hyung**
**Yongin-si**
**Gyeonggi-do 446-797 (KR)**

• **KIM, Ki-Jeong**
**Yongin-si**
**Gyeonggi-do 446-797 (KR)**
• **JIN, Hye-Seung**
**Yongin-si**
**Gyeonggi-do 446-797 (KR)**
• **LEE, Sang-Mok**
**Yongin-si**
**Gyeonggi-do 446-797 (KR)**
• **KWAK, Dong-Jin**
**Yongin-si**
**Gyeonggi-do 446-797 (KR)**

(74) Representative: **Merkle, Gebhard**
**Ter Meer Steinmeister & Partner**
**Patentanwälte mbB**
**Mauerkircherstrasse 45**
**81679 München (DE)**

(54) **FABRIC FOR AIRBAG AND METHOD FOR MANUFACTURING SAME**

(57) The present invention relates to a fabric for an airbag, and an airbag for a vehicle including the same, and particularly, to a fabric for an airbag, a method of manufacturing the same, and an airbag for a vehicle including the same, wherein the fabric is made of one or more fibers selected from the group consisting of nylon fiber, polyester fiber, polyolefin fiber, and aramid fiber, having a cover factor of 1500 to 2500, and having an exponent of dynamic air permeability (EXP) of 0.9 to 1.6 as measured by a method according to the American Society for Testing and Materials ASTM D 6476 method.

[FIG. 1]

**Description**

[Technical Field]

The present invention relates to a fabric for an airbag and a method of manufacturing the same. More particularly, the present invention relates to a fabric for an airbag having excellent durability to withstand momentary strong pressure upon airbag inflation, and internal pressure maintenance performance, a method of manufacturing the same, and an airbag for a vehicle including the same.

[Background]

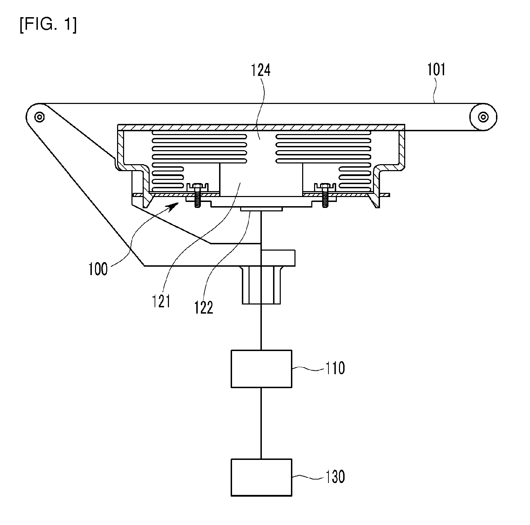

Generally, an airbag refers to a device to protect drivers and passengers upon a head-on collision of a vehicle driving at a speed of about 40 km/h or more by sensing collision impact of the vehicle with an impact sensor, and then exploding gunpowder to supply a gas into the airbag cushion, thereby inflating it. A typical structure of an airbag cushion system is as shown in FIG. 1.

As shown in FIG. 1, a typical airbag cushion system is configured to include an airbag cushion module 100 consisting of an inflator 121 generating a gas by ignition of a detonator 122, and an airbag cushion 124 expanded and deployed by inflation towards the driver at a driver's seat by the generated gas, and mounted on a steering wheel 101; an impact sensor 130 generating an impact signal at collision; and an electronic control module 110 igniting the detonator 122 of the inflator 121 according to the impact signal. In the airbag cushion system as configured above, when a vehicle collides head-on, the impact sensor 130 senses an impact to transmit a signal to the electronic control module 110. Herein, the electronic control module 110 recognizing the signal, and ignites the detonator 122 to burn a gas generator inside of the inflator 121. The thus-burned gas generator inflates the airbag cushion 124 through rapid gas generation. The airbag cushion 124 thus expanded and deployed by inflation contacts the frontal upper body of the driver to partly absorb an impact load caused by the collision, and in a case where the head and the chest of the driver move to the front by inertia to collide with the inflated airbag cushion 124, the gas in the airbag cushion 124 is rapidly emitted to an emission hole formed on the airbag cushion 124, and acts as a buffer to the front of the driver. Thus, a secondary injury may be reduced by effectively buffering an impact force transmitted to the driver upon frontal collision.

As described above, the airbag cushion used in a vehicle is, after being manufactured into a certain shape, mounted on a steering wheel, a side window, a side structure, or the like of the vehicle, in a folded state, in order to minimize the volume thereof. Herein, the airbag cushion is fixed to the vehicle body using its tap region and the like, maintained in the folded state, and then expanded and deployed by inflation when the inflator 121 is operated.

Generally, an airbag protects a passenger by effectively using a gas generated by an inflator without leakage to be inflated. To this end, a fabric for an airbag should have low air permeability. For this, thus far, static air permeability (SAP) of an amount of air escaping through the fabric by applying a constant pressure to a fabric has been applied as a required physical property.

However, when the airbag is expanded and deployed in practice, the pressure of the gas applied to the fabric for an airbag is inconsistent, and is changed depending on the situation. In such situation, the amount of gas escaping through the fabric becomes inconsistent. Because of this, there was difficulty in simply inferring gas flow and gas leakage amount in an actual deployment state only from static air permeability (SAP) which has been required and determined in a fabric state.

Therefore, it is required to develop a fabric for an airbag in which it is easy to infer gas flow and a gas leakage amount in an actual deployment state, and thus has excellent air sealing property and internal pressure maintenance performance, so that the airbag expresses excellent inflation and deployment performances upon airbag deployment.

[Summary of the Invention]

The present invention has been made in an effort to provide a fabric for an airbag having excellent mechanical and physical properties and internal pressure maintenance performance by optimizing a cover factor and an exponent of dynamic air permeability (EXP) in predetermined ranges, a method of manufacturing the same, and an airbag for a vehicle including the same.

[Detailed Description of the Embodiment]

An exemplary embodiment of the present invention provides a fabric for an airbag, made of one or more fibers selected from the group consisting of nylon fiber, polyester fiber, polyolefin fiber, and aramid fiber; having a cover factor of 1500 to 2500 as defined in the following Calculation Formula 1; and having an exponent of dynamic air permeability (EXP) of 0.9 to 1.6 as measured by the American Society for Testing and Materials ASTM D 6476 method.

[Calculation Formula 1]

Cover factor (CF)

$$= \text{warp density (thread/inch)} \times \sqrt{(\text{warp denier})} + \text{weft density (thread/inch)} \times \sqrt{(\text{weft denier})}$$

Another embodiment of the present invention provides a method of manufacturing the fabric of an airbag, including: weaving a fabric using one or more fibers selected from the group consisting of nylon fiber, polyester fiber, polyolefin fiber, and aramid fiber; scouring the woven fabric; and tentering the scoured fabric.

Still another embodiment of the present invention provides an airbag for a vehicle including the fabric for an airbag.

Hereinafter, a detailed description will be given of a fabric for an airbag, a method of manufacturing the same, and an airbag for a vehicle including the same according to specific exemplary embodiments of the present invention. However, this is presented as an illustration of the present invention, and does not limit the scope of protection of the invention. It is obvious to a person skilled in the art that various modifications of an exemplary embodiment are possible within the scope of protection of the invention.

Further, the terms "comprise", "include", and "contain" refer to include constitutional elements (or constitutional components) without any limitation, and should not be interpreted to exclude the possibility of adding other constitutional elements (or constitutional components).

The present invention may improve outflow prevention and airtightness, so that excellent deployment performance is expressed upon airbag expansion, while simultaneously securing excellent durability and dimensional stability, by maintaining both an exponent of dynamic air permeability (EXP) and a cover factor which may be described as key physical properties of a fabric for an airbag in optimal ranges.

Thus, according to one exemplary embodiment of the invention, a fabric of an airbag having predetermined properties is provided. The fabric for an airbag may be made of one or more fibers selected from the group consisting of nylon fiber, polyester fiber, polyolefin fiber, and aramid fiber; may have a cover factor as defined in the following Calculation Formula 1 of 1500 to 2500; and may have an exponent of dynamic air permeability (EXP) of 0.9 to 1.6 as measured by the American Society for Testing and Materials ASTM D 6476 method.

[Calculation Formula 1]

Cover factor (CF)

$$= \text{warp density (thread/inch)} \times \sqrt{(\text{warp denier})} + \text{weft density (thread/inch)} \times \sqrt{(\text{weft denier})}$$

Particularly, the present invention may express an optimal exponent of dynamic air permeability (EXP) of a fabric of an airbag by controlling a heat temperature in a heat chamber upon thermal processing of the woven fabric together with a fineness and a woven density of yarn, according to the process described below to optimize the cover factor of the fabric, and thus secure excellent deployment performance upon airbag deployment.

In case of an airbag cushion protecting a passenger in a vehicle, the flow and the outflow amount of gas flowed out through a fabric are required to be regulated in order to express the best performance of passenger protection upon deployment. However, since SAP which regulates the outflow amount of air by applying a constant pressure to a fabric may show a completely different aspect upon actual deployment under a condition of applying a varying pressure to a fabric depending on the situation, it has a limitation thereof.

In order to solve the problem, an exponent of dynamic air permeability as well as SAP may be optimized so that a fabric sufficiently expresses a normal performance even under a condition where a varied pressure is applied to the fabric depending on the situation upon actual deployment, thereby having excellent airbag deployment performance.

However, if the value of the exponent of dynamic air permeability is too high, the air permeability of the fabric may be very sensitively changed under a condition where the pressure applied to the fabric is changed depending on the situation upon airbag deployment, and thus the airbag may not express normal deployment performance. If the value of the exponent of dynamic air permeability is too low, the air permeability of the fabric is not changed at all under a condition where the pressure applied to the fabric is changed depending on the situation, and thus the cushion may be ruptured upon airbag deployment.

Further, if the cover factor of the fabric is too high, the fabric may have increased strength, but it may have a low value of the exponent of dynamic air permeability, and may also have a problem with a folding property for storing the cushion. On the contrary, if the cover factor of the fabric is too low, the fabric may have too low strength so that the cushion is ruptured upon deployment, or may have too high air permeability and exponent of dynamic air permeability so that the cushion has too low internal pressure upon airbag deployment, and thus the passenger protection performance is not normally expressed.

As a result of an experiment by the present inventors, it was found that an optimal exponent of dynamic air permeability (EXP) as a fabric for an airbag may be expressed by controlling a heating temperature in a heat chamber in heat processing of a woven fabric to manufacture a fabric for an airbag, and optimizing fineness and woven density of yarn to optimize a cover factor of the fabric, and thus excellent deployment performance may be secured upon airbag deployment.

As described above, according to one exemplary embodiment of the present invention, a fabric for an airbag having predetermined properties may be provided. The fabric for an airbag may have an exponent of dynamic air permeability (EXP) of 0.9 to 1.6, preferably 0.95 to 1.55, and more preferably 1.0 to 1.5. If the fabric has an EXP of more than 1.6, the air permeability of the fabric is very sensitively changed under a condition where a pressure applied to the fabric is changed depending on the situation upon airbag deployment, and thus normal deployment performance may not be expressed. Further, if the EXP of the fabric is less than 0.9, the air permeability of the fabric is not changed at all under a condition where the pressure applied to the fabric is changed depending on the situation, and thus the cushion may be ruptured upon airbag deployment.

Herein, the exponent of dynamic air permeability (EXP) of the fabric of an airbag is measured by the American Society for Testing and Materials ASTM D 6476 method. The exponent of dynamic air permeability (EXP) is measured by adjusting a compressed air pressure to have the peak pressure of 100 kPa, setting air permeability to have a lower limit pressure of 30 kPa and an upper limit pressure of 70 kPa when measured under the condition of a head size of 400 cc, and measuring a slope of the dynamic air permeability between the upper and lower limit pressures.

Further, the fabric for an airbag of the present invention may have a cover factor of 1500 to 2500, preferably 1550 to 2450, and more preferably 1600 to 2400. If the fabric has a cover factor of more than 2500, the value of an exponent of dynamic air permeability may be lowered, and a problem with the folding property for storing the cushion may be generated. On the contrary, if the cover factor of the fabric is less than 1500, the fabric may have too low strength so that the cushion is ruptured upon deployment, or have too high air permeability and exponent of dynamic air permeability so that the cushion have too low internal pressure upon airbag deployment, and thus the passenger protection performance may not be normally expressed.

The cover factor of the fabric of the present invention is as defined in the following Calculation Formula 1.

[Calculation Formula 1]

Cover factor (CF)

$$= \text{warp density (thread/inch)} \times \sqrt{(\text{warp denier})} + \text{weft density (thread/inch)} \times \sqrt{(\text{weft denier})}$$

Further, the fabric for an airbag of the present invention may maintain the exponent of dynamic air permeability (EXP) and the cover factor in predetermined ranges, and may also maintain both average dynamic air permeability (ADAP) and a crimp ratio in optimal ranges. In particular, the fabric for an airbag may have a crimp ratio of 3.0 to 12.0 % as measured by a method of DIN (German Institute for Standardization) 53852, and average dynamic air permeability (ADAP) of 100 to 1200 mm/sec as measured by the American Society for Testing and Materials ASTM D 6476 method.

The present invention may express optimal average dynamic air permeability (ADAP) as the fabric for an airbag so that excellent deployment performance is secured upon airbag deployment by controlling tension upon weaving together with the fineness and the woven density of yarn according to the following process, so as to optimize the crimp ratio of the fabric. In particular, if the fabric for an airbag is manufactured to have low average dynamic air permeability (ADAP) under all pressures, the airbag cushion may not withstand the peak pressure of gas so that it is ruptured upon airbag deployment. On the contrary, if the fabric is manufactured to have high average dynamic air permeability, the gas generated through an inflator upon airbag deployment may all escape through the fabric, so that the passenger protection performance is not normally expressed. Further, if the fabric has an unduly low crimp ratio, it may have corresponding low average dynamic air permeability, so that the cushion is ruptured upon airbag deployment. Also, if the fabric has an unduly high crimp ratio, it may have very high average dynamic air permeability, and thus the gas generated through an inflator upon airbag deployment may all escape through the fabric, so that the passenger protection performance is not normally expressed.

As a result of an experiment by the present inventors, it was found that optimal average dynamic air permeability (ADAP) of the fabric for an airbag may be expressed, thereby securing airbag deployment performance to a better degree by controlling tension upon weaving to manufacture the fabric for an airbag, and optimizing fineness and a weaving density of yarn so as to optimize the crimp ratio of the fabric.

The fabric for an airbag may have average dynamic air permeability (ADAP) of 100 to 1200 mm/sec, preferably 120 to 1150 mm/sec, and more preferably 150 to 1100 mm/sec. If the fabric has ADAP of less than 100 mm/sec, the airbag cushion may not withstand a peak pressure therein upon airbag deployment, thereby being ruptured. Further, if the fabric has ADAP of more than 1200 mm/sec, the gas in the cushion may all escape through the fabric upon airbag deployment, so that the passenger protective performance is not expressed.

Herein, the average dynamic air permeability (ADAP) of the fabric of an airbag is measured by the American Society for Testing and Materials ASTM D 6476 method. The average dynamic air permeability (ADAP) is measured by adjusting a compressed air pressure to have a peak pressure of 100 kPa, setting air permeability to have a lower limit pressure of 30 kPa and an upper limit pressure of 70 kPa when measured under the condition of a head size of 400 cc, and calculating an average value.

Further, the fabric for an airbag of the present invention may have a crimp ratio of 3.5 % to 12.0 %, preferably 3.7 % to 11.7 %, and more preferably 4.0 % to 11.5 %. If the fabric has a crimp ratio less than 3.5 %, the average dynamic air permeability may be very low, so that a problem of rupture of the cushion upon airbag deployment is generated. On the contrary, if the fabric has a crimp ratio of more than 12.0 %, the average dynamic air permeability may be very high, and thus the gas generated through an inflator upon airbag deployment may all escape through the fabric, so that the passenger protection performance is not normally expressed. In the present invention, the crimp ratio of the fabric is measured according to the DIN 53852 method.

As the yarn used in the manufacture of the fabric for an airbag of the present invention, a yarn including one or more selected from the group consisting of nylon fiber, polyester fiber, polyolefin fiber, and aramid fiber may be used. As the nylon fiber, a fiber such as, for example, nylon 6, nylon 66, nylon 12, nylon 16, or a copolymerization polyamide of nylon 6 and nylon 66 and the like, a copolymerization polyamide produced by copolymerizing nylon 6 and polyalkylene glycol, dicarboxylic acid, amine, and the like, and the like, may be included. In terms of the strength, thermal resistance, cost, and the like of the yarn, nylon 6 fiber, nylon 66 fiber, and the like are preferred. As the polyester fiber, a fiber such as, for example, polyethylene terephthalate, polybutylene terephthalate, and the like may be included. A copolymerization polyester fiber produced by copolymerization of polyethylene terephthalate or polybutylene terephthalate and an aliphatic dicarboxylic acid such as isophthalic acid, adipic acid, and the like as the acid component, may also be used. In addition, rayon fiber, polysulfone fiber, ultrahigh molecular weight polyethylene fiber, and the like may also be used.

Further, the yarn used in the manufacture of the fabric for an airbag of the present invention may have total fineness of 200 to 1300 denier, preferably 250 to 1250 denier, and more preferably 300 to 1200 denier. Among these, the yarn having total fineness of 200 denier or more is preferred in terms of the strength of the fabric, and 1300 denier or less is preferred in terms of the folding property. The denier refers to a unit representing a thickness of yarn or fiber, and 1 denier corresponds to 1 g per 9000 m in length.

Herein, a warp density and a weft density, that is, woven densities in a warp direction and a weft direction, of the fabric for an airbag may be 20 to 70 th/inch, preferably 22 to 68 th/inch, and more preferably 24 to 66 th/inch, respectively. Herein, the woven density represents the number of yarns contained per unit length of the fabric. The warp density and weft density of the fabric for an airbag may be 20 th/inch or more, respectively, in terms of securing excellent mechanical and physical properties of the fabric for an airbag, and may be 70 th/inch or less, respectively, in terms of improving a folding property and lowering stiffness of the fabric.

As described above, the present invention may significantly lower the stiffness of the fabric by controlling tension, heat treatment temperature, and the like upon weaving, so as to optimize the fineness and the woven density of the yarn, and accordingly optimize the cover factor of the fabric and the like. For example, the stiffness as measured by the American Society for Testing and Materials ASTM D 4032 method may be 1.5 kgf or less, or 0.4 to 1.5 kgf, preferably 1.2 kgf or less, and more preferably 1.0 kgf or less. As such, the fabric for an airbag of the present invention may secure excellent mechanical and physical properties, while simultaneously significantly lowering the stiffness of the fabric, thereby representing excellent folding, flexibility, and storage properties.

It is preferred that the fabric of the present invention maintains the stiffness range in order to be used for an airbag, and if the stiffness is too low, a sufficient protection support function may not be performed upon airbag inflation deployment, and shape retaining performance is poor even when mounted on a vehicle, thereby degrading the storage property. Further, in order to prevent degradation of the storage property caused by an unduly hard state to cause difficulty in folding, and prevent discoloration of the fabric, it is preferred that the fabric has stiffness of 1.5 kgf or less, and particularly if the fabric has fineness of less than 460 denier, stiffness of 0.8 kgf or less is preferred, while if the fabric has fineness of 550 denier or more, stiffness or 1.5 kgf or less is preferred.

The fabric for an airbag may have excellent tear strength depending on stress concentration, if it rapidly inflates with high instantaneous power of high temperature-high pressure gas upon airbag deployment. Herein, the tear strength representing bursting strength of the non-coated fabric for an airbag may be 18 kgf to 30 kgf, preferably 19 kgf to 27 kgf, and more preferable 20 kgf to 24 kgf, as measured by the American Society for Testing and Materials ASTM D 2261 - Tongue method. Herein, if the tear strength of the non-coated fabric is less than 18 kgf, rupture of the airbag may be generated upon airbag deployment, resulting in a great risk to an airbag function. On the contrary, if the tear strength of the non-coated fabric is more than 30 kgf, the folding property of the fabric may be lowered and the air sealing property may be too high, thereby raising the internal pressure of the cushion unduly high to cause a risk of rupturing of the cushion itself.

Further, the fabric for an airbag of the present invention may have tensile strength of 210 kgf/inch to 330 kgf/inch, and preferably 230 kgf/inch to 280 kgf/inch, as measured by the American Society for Testing and Materials ASTM D 5034 method at room temperature, and elongation at break of 31 to 50 %, and preferably of 35 to 45 %. Herein, it is preferred that the fabric has tensile strength and elongation at break of 210 kgf/inch or more and 35 % or more, respectively, in terms of excellent mechanical physical properties of the fabric, and of 330 kgf/inch or less and 45 % or less, respectively, in terms of the folding property and the deployment performance improvement of the cushion.

Further, according to another exemplary embodiment of the present invention, a method of manufacturing the fabric for an airbag as described above is provided. The method of manufacturing the fabric for an airbag according to the present invention includes a general weaving method, and scouring and tentering steps in a scope where a cover factor, an exponent of dynamic air permeability (EXP), and the like may be optimized to predetermined ranges. Herein, a woven form of the fabric may not be limited to a particular form, and woven forms of both a plain woven type and an OPW (one piece woven) type may be preferred.

In particular, a method of manufacturing the fabric of an airbag according to the present invention may include weaving a fabric using one or more fibers selected from the group consisting of nylon fiber, polyester fiber, polyolefin fiber, and aramid fiber; scouring the woven fabric; and tentering the scoured fabric.

The fabric for an airbag may be manufactured through beaming, weaving, scouring, and tentering processes, using a yarn such as nylon fiber as the weft and the warp. The fabric may be manufactured using a typical weaving machine, and the weaving machine is not limited to a particular one. However, the fabric of a plain woven form may be manufactured using a rapier loom, an air jet loom, or a water jet loom, and the fabric of an OPW form may be manufactured using a Jacquard loom.

Herein, a weaving tension condition may be applied as 50 to 200 N, preferably 48 to 198 N, and more preferably 45 to 195 N. If the tension condition is less than 50 N, a crimp ratio and average dynamic air permeability (ADAP) may be very high, and thus the gas generated through an inflator upon airbag deployment may all escape through the fabric, so that the passenger protection performance is not normally expressed. On the contrary, if the weaving tension condition is more than 200 N, a crimp ratio and average dynamic air permeability (ADAP) of the fabric may be too low, so that the cushion is ruptured upon airbag deployment.

The scouring process in the method of manufacturing the fabric for an airbag of the present invention may be carried out under a temperature condition of 40 to 100 °C, preferably 45 to 99 °C, and more preferably 50 to 98 °C. Contaminants, foreign substances, and the like generated in yarn production or fabric weaving may be removed from the woven fabric by washing them through the scouring process. A residence time in the scouring process may be controlled according to a process speed to move the fabric from a scouring bath, and a scouring velocity of the fabric may be 5 to 30 m/min, preferably 10 to 30 m/min, and more preferably 10 to 20 m/min. Such scouring process conditions may be modified according to process efficiency, and as necessary, considering the suitability such as, for example, a scouring agent and the like.

Further, after the scouring process, the fabric may be subjected to a tentering process which is a thermal fixing step to fix a shape, so that the shape is not changed by external influences. The tentering process is a process to control the density and the dimensions of the fabric, by adjusting the density of the fabric shrunk in the scouring step to a certain level required of a product. The tentering step may be carried out under a temperature condition of 150 to 190 °C, preferably 153 to 185 °C, and more preferably 155 to 180 °C. The tentering process temperature may be in the above described range in terms of minimizing thermal shrinkage of the fabric and improving dimensional stability.

The tentering process may be completed by cooling the fabric using a cooling cylinder and then winding it.

Meanwhile, according to another exemplary embodiment of the present invention, an airbag for a vehicle including the fabric for an airbag is provided. Further, an airbag system including the airbag is provided, and the airbag system may be equipped with a common device which is well-known to a person in the relevant art. The airbag for a vehicle may be, for example, a frontal airbag or a side curtain airbag.

The airbag for a vehicle may have a full deployment time of a cushion of 10 to 100 msec, preferably 20 to 75 msec, and more preferably 25 to 55 msec, if the fabric according to the present invention is used. The full deployment time of a cushion may be 10 msec or more in terms of preventing cushion rupture by high temperature-high pressure gas upon deployment, and 55 msec or less in terms of expressing stable passenger protection performance upon a vehicle crash.

In the present invention, since matters other than the above description may be adjustable as necessary, they are not particularly limited in the present invention.

[Advantageous Effects]

According to the present invention, a fabric for an airbag having excellent mechanical and physical properties and internal pressure maintenance performance by optimizing a cover factor and an exponent of dynamic air permeability (EXP) in predetermined ranges, and an airbag for a vehicle including the same, may be provided.

Since such a fabric for an airbag may have excellent mechanical and physical properties, shape stability, and air sealing effect, and may also secure an excellent folding property and flexibility, it may significantly improve the storage property when mounted on a vehicle, while simultaneously minimizing an impact of the vehicle and the passenger, thereby safely protecting the passenger.

[Brief Description of Drawings]

FIG. 1 is a diagram showing a general airbag system.

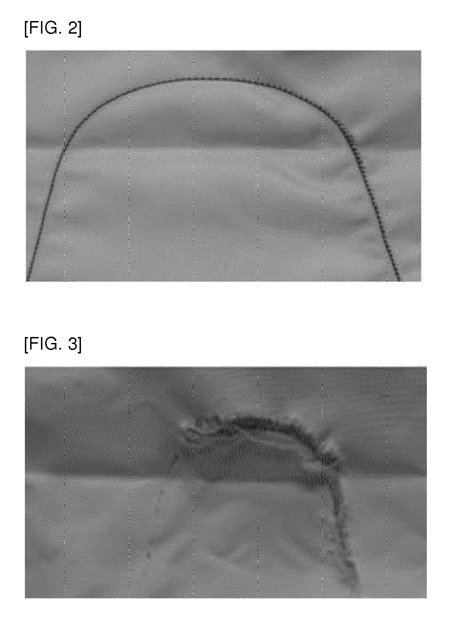

FIG. 2 is a photograph of a cushion after completing a deployment test, after manufacturing an airbag cushion using the fabric of Example 1.
FIG. 3 is a photograph of a cushion after completing a deployment test, after manufacturing an airbag cushion using the fabric of Comparative Example 4.

[Examples]

Hereinafter, preferred examples are presented in order to help better understanding of the present invention, however the following examples are only illustrative of the present invention, and do not limit the scope of the present invention.

Examples 1-7

A fabric was woven using a rapier loom under conditions such as the kind of yarn, fineness, a woven density, weaving tension, a tentering heat treatment temperature, and the like as shown in the following Table 1, and then subjected to scouring and tentering processes to obtain a non-coated fabric to be used as a woven fabric for an airbag.

The physical properties of the fabric for an airbag were measured by the following methods, and the measured physical properties are summarized in the following Table 1.

a) Exponent of dynamic air permeability (EXP)

An exponent of dynamic air permeability (EXP) of the non-coated fabric was measured according to American Society for Testing and Materials ASTM D 6476 method.

The exponent of dynamic air permeability (EXP) of the fabric was measured by adjusting a compressed air pressure to have the peak pressure of 100 kPa, setting air permeability to have a lower limit pressure of 30 kPa and an upper limit pressure of 70 kPa when measured under the condition of a head size of 400 cc, and measuring a slope between the upper and the lower limits.

b) Cover factor (CF)

A cover factor value of the non-coated fabric was calculated by the following Calculation Formula 1.

[Calculation Formula 1]

Cover factor (CF)

$$= \text{warp density (thread/inch)} \times \sqrt{(\text{warp denier})} + \text{weft density (thread/inch)} \times \sqrt{(\text{weft denier})}$$

c) Average dynamic air permeability (ADAP)

The average dynamic air permeability of the non-coated fabric was measured according to the American Society for Testing and Materials ASTM D 6476 method.

The average dynamic air permeability (ADAP) of the fabric was measured by adjusting a compressed air pressure to have a peak pressure of 100 kPa, setting air permeability to have a lower limit pressure of 30 kPa and an upper limit pressure of 70 kPa when measured under the condition of a head size of 400 cc, and calculating an average value.

d) Crimp ratio

A crimp ratio of the non-coated fabric was measured according to DIN 53852.

A fabric sample having a size of 300 mm x 300 mm was taken from the fabric to measure the crimp ratio according to the following Calculation Formula 2. 250 mm x 250 mm was indicated on the fabric sample, and this length is Lw. The fabric sample was clamped on one side, and loaded on the other side according to the DIN 53852 method, to measure a changed length (Lf) after 30 s. Based on the measurement value, the crimp ratio of the fabric was calculated according to the following Calculation Formula 2.

[Calculation Formula 2]

$$\text{Crimp ratio (Crimp, \%)} = (Lf-Lw)/Lw$$

Further, an airbag cushion for a passenger seat was manufactured using a non-coated fabric which was a manufactured fabric for an airbag not subjected to an additional coating process, and a deployment test was carried out on the cushion by measuring the time from explosion of gun powder to full deployment, and checking if the cushion was ruptured.

The results of measurement of physical properties of the fabric for an airbag according to Example 1-7, and the airbag cushion including the same, are as described in the following Table 1.

[Table 1]

|  | Example 1 | Example 2 | Example 3 | Example 4 | Example 5 | Example 6 | Example 7 |
|---|---|---|---|---|---|---|---|
| Kind of yarn | Nylon 66 | Nylon 66 | Nylon 66 | Nylon 66 | Nylon 66 | Nylon 66 | PET |
| Warp fineness (de) | 420 | 630 | 525 | 420 | 315 | 840 | 500 |
| Weft fineness (de) | 420 | 630 | 525 | 420 | 315 | 840 | 500 |
| Warp density (th/inch) | 49 | 41 | 45 | 53 | 60 | 32 | 51 |
| Weft density (th/inch) | 49 | 41 | 45 | 53 | 60 | 32 | 51 |
| Weaving tension (N) | 135 | 135 | 135 | 145 | 140 | 130 | 150 |
| Tentering temperature (°C) | 160 | 160 | 160 | 172 | 170 | 155 | 175 |
| EXP | 1.13 | 1.06 | 1.13 | 1.31 | 1.31 | 1.42 | 1.18 |
| Cover factor | 2,008 | 2,058 | 2,062 | 2,172 | 2,130 | 1,855 | 2,281 |
| ADAP (mm/s) | 552 | 648 | 543 | 405 | 593 | 892 | 249 |
| Warp crimp (%) | 5.61 | 5.55 | 5.52 | 5.58 | 5.64 | 5.54 | 4.47 |
| Weft crimp (%) | 10.47 | 10.38 | 9.7 | 9.06 | 9.27 | 9.37 | 4.98 |
| Full deployment time of cushion (ms) | 44 | 43 | 41 | 40 | 40 | 50 | 39 |
| Cushion rupture | No | No | No | No | No | No | No |

**Comparative Examples 1 - 4**

An airbag fabric and an airbag cushion including the same were manufactured and according to the same method as Examples 1-7, except for weaving, scouring, and tentering a fabric under conditions as shown in the following Table 2 to obtain a non-coated fabric and prepare the airbag cushion by using the non-coated fabric. The physical properties thereof were measured according to the same method as described above, which are summarized in the following Table 2.

[Table 2]

| | Comparative Example 1 | Comparative Example 2 | Comparative Example 3 | Comparative Example 4 |
|---|---|---|---|---|
| Kind of yarn | Nylon 66 | Nylon 66 | Nylon 66 | Nylon 66 |
| Warp fineness (de) | 525 | 420 | 420 | 420 |
| Weft fineness (de) | 525 | 420 | 420 | 420 |
| Warp density (th/inch) | 55 | 32 | 49 | 49 |
| Weft density (th/inch) | 55 | 32 | 49 | 49 |
| Weaving tension (N) | 135 | 135 | 40 | 230 |
| Tentering temperature (°C) | 160 | 160 | 40 | 210 |
| EXP | 0.88 | 1.62 | 1.68 | 0.89 |
| Cover factor | 2,520 | 1,312 | 2,008 | 2,008 |
| ADAP (mm/s) | 98 | 1,240 | 1280 | 92 |
| Warp crimp (%) | 5.72 | 4.23 | 9.82 | 3.3 |
| Weft crimp (%) | 11.32 | 8.92 | 13.21 | 3.2 |
| Full deployment time of cushion (ms) | - | 70 | 62 | - |
| Cushion rupture | Yes | No | No | Yes |

As shown in Table 1, the fabrics of Examples 1 to 7 having the optimum exponent of dynamic air permeability (EXP) and the cover factor according to the present invention exhibited superior properties to satisfy the full deployment time of a cushion required in a general airbag system and have no rupture of the cushion at the time of airbag cushion deployment, and thereby there was no problem in expression of an airbag performance.

On the contrary, as shown in Table 2, the fabrics of Comparative Examples 1 to 4 according to a conventional method did not satisfy these characteristics at the time of airbag cushion deployment. After performing the test of the airbag cushion deployment, there were some problems in terms of a deployment speed, durability to high temperature-high pressure, and so on, for passenger protection. In particular, the fabric of Comparative Example 1 had too high value of the cover factor and too low EXP, so that the cushion manufactured by the fabric did not withstand the peak pressure therein in the cushion deployment test, resulting in being ruptured. In case of Comparative Example 2, the cover factor of the fabric was too low and EXP of the fabric was too high, so that much gas leaked through the fabric part at the time of the cushion deployment test to make the deployment speed of the cushion too slow, thereby not normally protecting a passenger. In case of Comparative Example 3, EXP was too high, so that much gas leaked through the fabric part at the time of the cushion deployment test to make the deployment speed of the cushion too slow, thereby not normally protecting a passenger. The fabric of Comparative Example 4 having too low EXP is susceptible to rupture, because the low EXP results in low resistance to the instantaneous unfolding impact from the inflator under high-temperature and high-pressure conditions at the time of the cushion deployment test.

**Claims**

1. A fabric for an airbag, made of one or more fibers selected from the group consisting of nylon fiber, polyester fiber, polyolefin fiber, and aramid fiber,
   having a cover factor of 1500 to 2500 as defined in the following Calculation Formula 1, and
   having an exponent of dynamic air permeability (EXP) of 0.9 to 1.6 as measured by the American Society for Testing and Materials ASTM D 6476 method:

   [Calculation Formula 1]

   Cover factor (CF)

   $$= \text{warp density (thread/inch)} \times \sqrt{\text{(warp denier)}} + \text{weft density (thread/inch)} \times \sqrt{\text{(weft denier)}}$$

2. The fabric for an airbag according to Claim 1,
   wherein it has a crimp ratio of 3.0 % to 12.0 % as measured by a method of the German Institute for Standardization DIN 53852, and an
   average dynamic air permeability (ADAP) of 100 to 1200 mm/s as measured by the American Society for Testing and Materials ASTM D 6476 method.

3. The fabric for an airbag according to Claim 1, wherein the fiber has a fineness of 200 to 1300 denier.

4. The fabric for an airbag according to Claim 1, wherein it has a warp density and a weft density of 20 to 70 th/inch, respectively.

5. The fabric for an airbag according to Claim 1, wherein it has stiffness of 1.5 kgf or less as measured by the American Society for Testing and Materials ASTM D 4032 method.

6. The fabric for an airbag according to Claim 1, wherein it has tear strength of 18 kgf to 30 kgf as measured by the American Society for Testing and Materials ASTM D 2261 - Tongue method.

7. The fabric for an airbag according to Claim 1, wherein it has tensile strength of 210 kgf/inch to 330 kgf/inch as measured by the American Society for Testing and Materials ASTM D 5034 method.

8. A method of manufacturing the fabric for an airbag according to any one of Claims 1 to 7, comprising the steps of:

   weaving a fabric using one or more fibers selected from the group consisting of nylon fiber, polyester fiber, polyolefin fiber, and aramid fiber;
   scouring the woven fabric; and
   tentering the scoured fabric.

9. The method according to Claim 8, wherein the scouring is carried out under a temperature condition of 40 to 100 °C.

10. The method according to Claim 8, wherein the scouring is carried out at a scouring velocity of 5 to 30 m/min.

11. The method according to Claim 8, wherein the tentering is carried out under a temperature condition of 150 to 190 °C.

12. An airbag for a vehicle comprising the fabric for an airbag according to any one of Claims 1 to 7.

13. The airbag for a vehicle according to Claim 12, which is a frontal airbag or a side curtain airbag.

[FIG. 1]

[FIG. 2]

[FIG. 3]

## INTERNATIONAL SEARCH REPORT

| International application No. |
| --- |
| **PCT/KR2013/005555** |

**A. CLASSIFICATION OF SUBJECT MATTER**

***D03D 1/02(2006.01)i, B60R 21/16(2006.01)i***

According to International Patent Classification (IPC) or to both national classification and IPC

**B. FIELDS SEARCHED**

Minimum documentation searched (classification system followed by classification symbols)
D03D 1/02; D03D 15/00; D02G 3/26; D06C 7/00; D06M 11/77; D03D 15/12; D06M 15/693; B60R 21/16

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: airbag, textile, cover factor, dynamic air permeability

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2011-0109117 A (KOLON INDUSTRIES, INC.) 06 October 2011 See claims 1, 3-5, 7 and 13-16; page 9, paragraph [0058]; page 14, table 1. | 1,3-13 |
| A | | 2 |
| A | KR 10-2012-0029957 A (KOLON INDUSTRIES, INC.) 27 March 2012 See abstract; claims 1-14. | 1-13 |
| A | KR 10-1032792 B1 (KOLON CORPORATION) 06 May 2011 See abstract; claims 1-16. | 1-13 |
| A | KR 10-2007-0027990 A (KOLON CORPORATION) 12 March 2007 See abstract; claims 1-6. | 1-13 |
| A | JP 06-192938 A (TEIJIN LTD.) 12 July 1994 See abstract; claims 1, 2. | 1-13 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 23 SEPTEMBER 2013 (23.09.2013) | **25 SEPTEMBER 2013 (25.09.2013)** |

| Name and mailing address of the ISA/KR | Authorized officer |
| --- | --- |
| Korean Intellectual Property Office Government Complex-Daejeon, 189 Seonsa-ro, Daejeon 302-701, Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2013/005555**

| Patent document cited in search report | Publication date | Patent family member | Publication date |
|---|---|---|---|
| KR 10-2011-0109117 A | 06/10/2011 | CN 102933756 A | 13/02/2013 |
| | | EP 2557210 A2 | 13/02/2013 |
| | | JP 2013-525616 A | 20/06/2013 |
| | | KR 10-2012-0000933 A | 04/01/2012 |
| | | US 2013-0106081 A1 | 02/05/2013 |
| | | WO 2011-122800 A2 | 06/10/2011 |
| | | WO 2011-122800 A3 | 15/03/2012 |
| KR 10-2012-0029957 A | 27/03/2012 | KR 10-2012-0029956 A | 27/03/2012 |
| | | KR 10-2012-0029958 A | 27/03/2012 |
| | | US 2013-0187367 A1 | 25/07/2013 |
| | | WO 2012-036511 A2 | 22/03/2012 |
| | | WO 2012-036511 A3 | 28/06/2012 |
| KR 10-1032792 B1 | 06/05/2011 | KR 10-2010-0119519 A | 09/11/2010 |
| KR 10-2007-0027990 A | 12/03/2007 | KR 10-1109042 B1 | 31/01/2012 |
| JP 06-192938 A | 12/07/1994 | JP 02935939 B2 | 16/08/1999 |